# FASCICULE DE BREVET EUROPEEN

(11) **EP 2 855 222 B1**
(45) Date de publication et mention de la délivrance du brevet: **14.11.2018**
(21) Numéro de dépôt: 13724810.0
(22) Date de dépôt: 22.05.2013
(51) Int. Cl.: B60T 13/57

(54) **SERVOFREIN A DEPRESSION**
VAKUUMBREMSKRAFTVERSTÄRKER
VACUUM BRAKE BOOSTER

(30) Priorité: 31.05.2012 FR 1255047
(43) Date de publication de la demande: 08.04.2015
(73) Titulaire: Robert Bosch GmbH, 70442 Stuttgart (DE)
(72) Inventeur: BERTHOMIEU, Bruno, E-08041 Barcelona (ES); SIMON BACARDIT, Joan, E-08013 Barcelona (ES)
(86) Numéro de dépôt international: PCT/EP2013/060487
(87) Numéro de publication internationale: WO 2013/178514

(56) Documents cités:
- WO-A1-03/064231
- FR-A1- 2 908 373
- GB-A- 2 095 778

## Description

### Domaine de l'invention

L'invention se rapport à un servofrein à dépression comprenant un boîtier formé par un fond recevant un piston et complété par un couvercle pour délimiter deux chambres initialement mises en dépression, et dont la chambre est reliée à l'atmosphère par un ensemble de valves pour créer sur commande une différence de pression appliquée au piston poussant le maître-cylindre par un piston intermédiaire,
- le piston ayant une membrane appuyée contre sa face arrière, dont la périphérie extérieure est fixée au niveau du sertissage du fond et du couvercle et la périphérie intérieure autour de l'axe (XX) du servofrein à dépression, est fixée à la base d'un corps cylindrique logeant l'ensemble de valves gérant le fonctionnement pneumatique du servofrein à dépression,
- le corps cylindrique traversant de manière étanche l'ouverture munie d'un joint du fond,
- le corps cylindrique portant une clé en forme de U renversé étant glissée dans deux rainures du corps cylindrique et venant en butée contre le retour du logement cylindrique en amont du logement du joint.

### Etat de la technique

Il existe de manière générale des servofreins à dépression du type défini ci-dessus et dans le document FR 2 908 373. Ces servofreins ont une clé ou élément de blocage servant de butée arrière à l'équipage mobile portant le piston en position d'équilibre lorsque le servofrein est au repos. Mais lorsque le servofrein est actionné, la clé est laissée libre à l'intérieur de son logement et peut alors entrer en vibration générant du bruit. Le document GB 2 095 778 A décrit un servofrein avec un corps cylindrique portant une clé en forme E.

Le document WO 03/064231 A1 décrit un servofrein avec une clé en forme U, afin de prévenir un déplacement axiale d'un piston de valve relative à un corps de commande.

### But de l'invention

La présente invention a pour but de résoudre le problème du bruit de la clé du servofrein quelque soit la position de la clé entre l'élément extérieur et le corps portant l'ensemble des valves pour éviter les vibrations.

### Exposé et avantages de l'invention

A cet effet, l'invention a pour objet un servofrein du type défini ci-dessus caractérisé par un élément d'amortissement entre l'avant de la clé et en arrière de l'embase portant le piston et le bourrelet de la membrane.

La clé du servofrein selon l'invention est tenue en position légèrement pré-chargée à tout moment, ce qui évite les bruits de la clé pendant le freinage mais aussi au moment de l'entrée en contact de la clé avec la butée.

Le servofrein selon l'invention a une structure simple, tant pour sa réalisation que pour son montage.

Suivant une autre caractéristique avantageuse, la clé est une pièce en forme de U renversé à deux branches engagées dans les rainures latérales du corps.

Suivant une autre caractéristique avantageuse, l'élément d'amortissement est une pièce réalisée en caoutchouc, en matière plastique souple ou en une mousse.

### Dessins

La présente invention sera décrite ci-après de manière plus détaillée à l'aide d'un exemple de réalisation d'un servofrein à dépression représenté dans les dessins annexés dans lesquels :
- la figure 1 est une coupe axiale du servofrein à dépression,
- la figure 2 est une coupe transversale par le plan II-II du servofrein selon la figure 1,

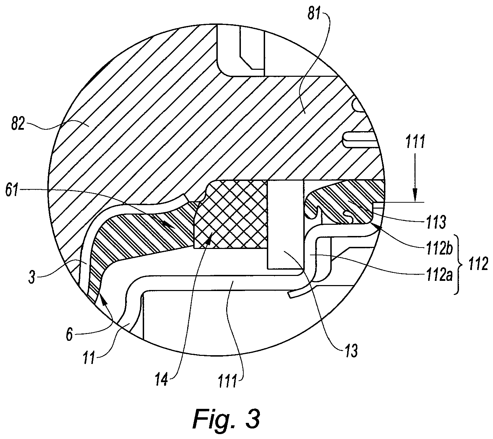

- la figure 3 est une vue à échelle agrandie de la partie III de la figure 1.

### Description de modes de réalisation de l'invention

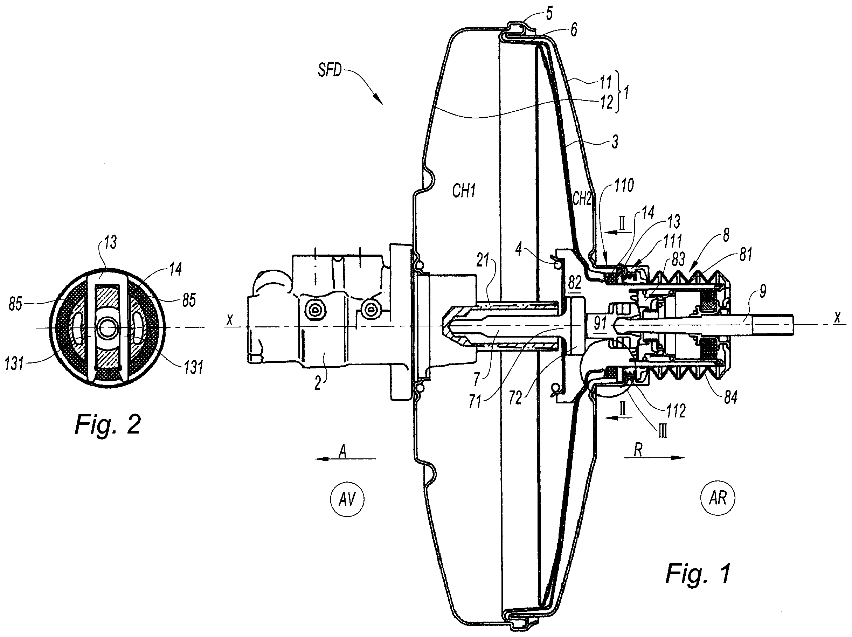

Selon la figure 1, l'invention a pour objet un servofrein à dépression (SFD) composé d'un boîtier à dépression 1 formé d'un fond 11 relié à un couvercle 12 avec interposition d'un piston rigide 3 relié à la région de sertissage périphérique 5 du fond 11 et du couvercle 12 par une membrane 6 de façon à délimiter de part et d'autre du piston 3 une chambre CH1, CH2 initialement mise sous vide ; l'une (CH2) des chambres est mise à l'atmosphère au moment du freinage pour créer la poussée agissant sur la tige de poussée 7 actionnant le maître-cylindre 2 tel qu'un maître-cylindre tandem. La gestion pneumatique du servofrein est assurée par un ensemble de valves 8 non détaillées actionnées par la tige de commande 9 elle-même reliée par une tringlerie à la pédale de frein non représentée.

Le maître-cylindre 2 est fixé au servofrein SFD et l'ensemble ainsi assemblé est fixé à la cloison séparant l'enceinte du moteur à l'avant (AV) et l'habitacle du véhicule à l'arrière (AR) selon l'orientation du véhicule.

L'ensemble de valves 8 est logé dans un corps cylindrique 81 portant le piston 3 par sa base élargie 82 et logeant la tête 71 de la tige poussée 7 avec interposition du disque de réaction 72. Le piston 3 pousse la tige 7 en prenant appui sur le disque de réaction 72 par l'avant 82 du corps cylindrique 81.

L'avancée du piston 3 est commandée par la mise à l'atmosphère de la chambre CH2 par les valves non détaillées 83 de l'ensemble de valves 8 ; la poussée ainsi exercée sur le piston principal 21 du maître-cylindre 2, est le produit de la surface du piston 3 par la différence de pression entre les chambres CH1, CH2.

L'actionnement du servofrein à dépression SFD est déclenché par le mouvement de la tige de commande 9 poussée par la pédale de frein non représentée et produisant l'ouverture des valves 83 à l'atmosphère. Au cours de ce fonctionnement normal du servofrein à dépression SFD, le disque de réaction 72 n'est poussé que par le piston 3. Le mouvement de retour (flèche R) est fait par le ressort 4 simplement esquissé.

Lors de l'actionnement normal, le piston intermédiaire 91 relié à la tige de commande 9, ne pousse pas sur le disque de réaction 72. Ce n'est qu'en cas de défaillance du servofrein SFD que la tige 9 pousse directement le piston 7 par le piston intermédiaire 91 et le disque de réaction 72.

L'ensemble mobile constitué par le piston 3 et le corps 81, 82 est monté libre en translation dans l'ouverture 111 du fond 11 de forme cylindrique avec un retour 112 constituant une surface de butée 112a et un logement 112b pour un joint d'étanchéité 113. Le joint d'étanchéité 113 s'appuie sur la surface extérieure cylindrique du corps cylindrique 81. La partie du corps 81 en saillie de l'ouverture 111 est couverte par un soufflet 84.

L'ensemble mobile 3, 81, 82 est limité dans son mouvement de recul (flèche R) par une clé 13 en forme de U renversé dont les branches 131 sont, glissées dans deux rainures latérales 85 du corps 81 ou de sa base élargie 82 pour venir s'appuyer contre la surface périphérique de butée 112a.

Le contour de la clé 13 s'inscrit dans le contour intérieur du manchon 110 du fond 11 terminé par le retour 112 et entourant l'avant du corps cylindrique 81.

Du côté avant, la clé 13 est au contact d'un élément d'amortissement 14 en un matériau souple, tel que du caoutchouc, une matière plastique ou une mousse plastique qui évite que la clé 13 ne soit bruyante lorsqu'elle n'est plus appuyée contre la surface 112a pendant que le piston 3 pousse la tige 7 (flèche A).

L'élément d'amortissement 14, par exemple de forme annulaire (figure 2) est sur le corps cylindrique 81 devant la base 82 portant l'extrémité du piston 3 et le bourrelet 61 de la membrane 6 couvrant le piston 3. L'élément d'amortissement 14 est installé avant la mise en place de la clé 13 et reste tenu par celle-ci.

L'ensemble mobile 3, 8 avec la clé 13 est introduit dans l'ouverture 111, 112 du fond 11 du boîtier avec aussi le ressort 4 puis, après mise en place du couvercle 12, les bords périphériques sont sertis emprisonnant le bord de la membrane 6 portée par le piston 3.

**NOMENCLATURE**

| | | | |
|---|---|---|---|
| SFD | | | servofrein à dépression |
| AV | | | avant |
| AR | | | arrière |
| A | | | flèche /freinage |
| R | | | flèche / défreinage |
| CH1, CH2 | | | chambres du boîtier du servofrein |
| 1 | | | boîtier |
| | 11 | | fond |
| | | 110 | logement |
| | | 111 | ouverture |
| | | 112 | retour |
| | | 112a | surface de butée |
| | | 112b | logement du joint |
| | | 113 | joint d'étanchéité |
| | 12 | | couvercle |
| | 13 | | clé |
| | | 131 | branches |
| 2 | | | maître-cylindre |
| | 21 | | piston principal |
| 3 | | | piston du servofrein |
| 4 | | | ressort de rappel du piston 3 |
| 5 | | | sertissage périphérique |
| 6 | | | membrane |
| 7 | | | tige de poussée |
| | 71 | | tête de la tige de poussée |
| | 72 | | disque de réaction |
| 8 | | | ensemble de valves |
| | 81 | | corps cylindrique |
| | 82 | | base |
| | 83 | | valves |
| | 84 | | rainure latérale |
| 9 | | | tige de commande |
| | 91 | | piston intermédiaire |

## Revendications

1. Servofrein à dépression comprenant un boîtier (1) formé par un fond (11) recevant un piston (3) et complété par un couvercle (12) pour délimiter deux chambres (CH1, CH2) initialement mises en dépression, et dont la chambre (CH2) est reliée à l'atmosphère par un ensemble de valves (8) pour créer sur commande une différence de pression appliquée au piston (3) poussant le maître-cylindre (2) par un piston intermédiaire (7),
- le piston (3) ayant une membrane (6) appuyée contre sa face arrière, dont la périphérie extérieure est fixée au niveau du sertissage du fond (11) et du couvercle (12) et la périphérie intérieure autour de l'axe (XX) du servofrein à dépression, est fixée à la base (82) d'un corps cylindrique logeant l'ensemble de valves (8) gérant le fonctionnement pneumatique du servofrein à dépression,
- le corps cylindrique (81) traversant de manière étanche l'ouverture (111) munie d'un joint (113) du fond (11),
- le corps cylindrique (81) portant une clé (13) en forme de U renversé étant glissée dans deux rainures (85) du corps cylindrique (81) et venant en butée contre le retour (112a) du logement cylindrique (110) en amont du logement (112b) du joint (113), le servofrein comportant
- un élément d'amortissement (14) entre l'avant de la clé (13) et en arrière de l'embase (82) portant le piston (3) et le bourrelet (61) de la membrane (6).

2. Servofrein à dépression selon la revendication 1,
**caractérisé en ce que**
la clé (13) est une pièce en forme de (U) renversé à deux branches (131) engagées dans les rainures latérales (85) du corps (81).

3. Servofrein à dépression selon la revendication 1,
**caractérisé en ce que**
l'élément d'amortissement (14) est une pièce réalisée en caoutchouc, en matière plastique souple ou en une mousse.

## Patentansprüche

1. Vakuum-Bremskraftverstärker, welcher ein Gehäuse (1) umfasst, das von einem Boden (11) gebildet wird, der einen Kolben (3) aufnimmt, und von einem Deckel (12) vervollständigt wird, um zwei Kammern (CH1, CH2) zu begrenzen, die anfänglich evakuiert werden, und von denen die Kammer (CH2) über eine Anordnung von Ventilen (8) mit der Atmosphäre verbunden ist, um auf Befehl eine Druckdifferenz zu erzeugen, die an den Kolben (3) angelegt wird, der über einen Zwischenkolben (7) Druck auf den Hauptzylinder (2) ausübt,
- wobei der Kolben (3) eine gegen seine Rückseite gedrückte Membran (6) aufweist, deren äußerer Umfang an der Crimpverbindung des Bodens (11) und des Deckels (12) befestigt ist und deren innerer Umfang um die Achse (XX) des Vakuum-Bremskraftverstärkers herum am Unterteil (82) eines zylindrischen Körpers befestigt ist, der die Anordnung von Ventilen (8) aufnimmt, welche den pneumatischen Betrieb des Vakuum-Bremskraftverstärkers steuern,
- wobei der zylindrische Körper (81) die mit einer Dichtung (113) versehene Öffnung (111) des Bodens (11) dicht durchquert,
- wobei der zylindrische Körper (81) einen Schlüssel (13) in Form eines umgekehrten "U" trägt, der in zwei Nuten (85) des zylindrischen Körpers (81) eingeschoben wird und an dem Rücksprung (112a) der zylindrischen Aufnahme (110) vor der Aufnahme (112b) der Dichtung (113) zur Anlage kommt,
wobei der Bremskraftverstärker aufweist:
- ein Dämpfungselement (14) zwischen dem vorderen Teil des Schlüssels (13) und hinter dem Basisteil (82), das den Kolben (3) und den Wulst (61) der Membran (6) trägt.

2. Vakuum-Bremskraftverstärker nach Anspruch 1,
**dadurch gekennzeichnet, dass**
der Schlüssel (13) ein Teil von der Form eines umgekehrten (U) mit zwei Schenkeln (131) ist, die in die seitlichen Nuten (85) des Körpers (81) eingreifen.

3. Vakuum-Bremskraftverstärker nach Anspruch 1,
**dadurch gekennzeichnet, dass**
das Dämpfungselement (14) ein aus Gummi, aus weichem Kunststoff oder aus einem Schaumstoff hergestelltes Teil ist.

## Claims

1. Vacuum brake booster comprising a casing (1) formed by an end wall (11) housing a piston (3) and supplemented by a cover (12) to delimit two chambers (CH1, CH2) initially placed under vacuum, and of which the chamber (CH2) is connected to the atmosphere by a set of valves (8) so as, on command, to create a pressure difference applied to the piston (3) pushing the master cylinder (2) via an intermediate piston (7),
- the piston (3) having a diaphragm (6) pressed against its rear face, of which diaphragm the exterior periphery is fixed into the crimping between the end wall (1·1) and the cover (12) and the internal periphery, around the axis (XX) of the vacuum brake booster, is fixed to the base (82) of a cylindrical body housing the set of valves (8) that control the pneumatic operation of the vacuum brake booster,
- the cylindrical body (81) passing in a sealed manner through the opening (111) equipped with a seal (113) in the end wall (11),
- the cylindrical body (81) bearing an inverted U-shaped clip (13) slipped into two grooves (85) in the cylindrical body (81) and coming into abutment against the return (112a) of the cylindrical housing (110) upstream of the housing (112b) for the seal (113),
the brake booster comprising
- a damping element (14) between the front of the clip (13) and to the rear of the base (82) bearing the piston (3) and the bulge (61) of the diaphragm (6).

2. Vacuum brake booster according to Claim 1, **characterized in that** the clip (13) is an inverted U-shaped component with two branches (131) engaged in the lateral grooves (85) of the body (81).

3. Vacuum brake booster according to Claim 1, **characterized in that** the damping element (14) is a component made of rubber, flexible plastic, or foam.
